# EUROPÄISCHE PATENTSCHRIFT

(11) **EP 2 558 371 B1**
(45) Veröffentlichungstag und Bekanntmachung des Hinweises auf die Patenterteilung: **25.11.2015**
(21) Anmeldenummer: 11719170.0
(22) Anmeldetag: 12.04.2011
(51) Int. Cl.: B65D 1/32, B65D 41/04, B65D 47/08

(54) **SORTIMENT, INSBESONDERE MODULARES KOSMETIKFLASCHENSORTIMENT SOWIE VERWENDUNG EINES ADAPTERS FÜR EIN SOLCHES SORTIMENT**
RANGE, IN PARTICULAR MODULAR COSMETICS-BOTTLE RANGE AND USE OF AN ADAPTOR FOR SUCH A RANGE
ASSORTIMENT, EN PARTICULIER ASSORTIMENT MODULAIRE DE BOUTEILLES DE PRODUIT COSMÉTIQUE ET UTILISATION D'UN ADAPTATEUR POUR TEL ASSORTIMENT

(30) Priorität: 18.05.2010 US 345804 P; 14.04.2010 DE 102010015017
(43) Veröffentlichungstag der Anmeldung: 20.02.2013
(73) Patentinhaber: SHB GmbH, 74564 Crailsheim (DE)
(72) Erfinder: STOLLE, Jens-Olaf, 74564 Crailsheim (DE)
(74) Vertreter: FDST Patentanwälte
(86) Internationale Anmeldenummer: PCT/EP2011/001825
(87) Internationale Veröffentlichungsnummer: WO 2011/128067

(56) Entgegenhaltungen:
- EP-A2- 0 887 279
- WO-A1-92/04275
- WO-A1-02/081316
- WO-A1-2007/017036
- DE-A1- 10 051 753
- DE-C1- 19 838 685
- DE-U1- 20 018 710
- US-B1- 6 964 359
- US-B1- 7 185 775

## Beschreibung

Die Erfindung betrifft ein Sortiment, insbesondere ein modulares Kosmetikflaschensortiment sowie die Verwendung eines Adapters in einem solchen Sortiment.

Flüssige Körperpflege-Produkte, wie Seifen, Shampoos, Duschbäder, Lotionen, etc. werden häufig in Flaschen als Verkaufsverpackungen für den Endkunden angeboten. Derartige, im Folgenden auch als Kosmetikflaschen bezeichnete Flaschen sind aus Kunststoff und mit einem kappenförmigen Verschlusselement verschließbar. Hierbei gibt es eine große Vielfalt sowohl hinsichtlich der Form- als auch der Farbgebung sowohl der Flaschen als auch der Verschlusselemente.

Die Verschlusselemente werden häufig als so genannte Prellverschlüsse ausgebildet. Unter Prellverschluss wird hierbei ein Verschluss verstanden, der lediglich auf einen Flaschenhals der Flasche gegebenenfalls unter Ausübung einer leichten Drehbewegung aufgeschnappt bzw. aufgedrückt werden muss. Häufig ist am Kappenelement über ein Klappscharnier ein Verschlussdeckel angelenkt. Kappenelement und Verschlussdeckel bilden hierbei eine einstückige Baueinheit und sind üblicherweise als ein einheitliches Kunststoff-Spritzgussteil ausgebildet.

Aufgrund der aufwändigen Mechanik für die Ausbildung des Klappschamiers ist die Herstellung eines derartigen Prellverschlusses mit über einem Klappscharnier befestigten Deckel vergleichsweise aufwändig und damit teuer, so dass derartige Verschlusselemente üblicherweise nur bei sehr hohen Stückzahlen rentabel angeboten werden können. Es ist daher kaum möglich, kostengünstig Variationen eines derartigen Verschlusselements - abgesehen von Farbvariationen - anzubieten, um beispielsweise auf spezielle Kundenwünsche einzugehen, die durch ein kundenspezifisches Design ein exklusives Verschlusselement wünschen. Unter Kunden sind hierbei die Anbieter und Hersteller der Körperpflegeprodukte zu verstehen.

Aus der DE 10 2007 049 217 B4 ist ein Verschlusselement für eine Kosmetikflasche zu entnehmen, welches sich zusammensetzt aus einem Adapter und einem Kappenelement, wobei der Adapter zum Aufsetzen auf die Flasche einerseits und für das Aufsetzen des Kappenelements andererseits jeweils einen identischen Anschluss aufweist, so dass der Anschluss der Flasche durch den Adapter quasi fortgesetzt ist. Durch diese Ausgestaltung ist ein zusätzlicher Gestaltungsfreiheitsgrad für eine individuelle, kundenspezifische Ausbildung geschaffen. Aufgrund der zum Anschluss der Flasche identischen Ausgestaltung des Anschlusses des Adapters kann das Kappenelement wahlweise mit oder ohne Adapter auf die Flasche aufgesetzt werden.

In der DE 100 51 753 A1 ist ein Dosierspender für eine Spritzflasche beschrieben, wie sie beispielsweise als WC-Reinigungsflasche eingesetzt wird. Der Dosierspender ist mittels einer Schraubverschluss-Kappe verschließbar und selbst auf einen Flaschenhals der Flasche aufprellbar.

Ausgehend hiervon liegt der Erfindung die Aufgabe zugrunde, die Variantenvielfalt bei derartigen Kosmetikflaschen bei geringer Bauteilanzahl zu erhöhen.

Die Aufgabe wird erfindungsgemäß gelöst durch ein Sortiment, insbesondere modulares Kosmetikflaschensortiment mit den Merkmalen des Anspruchs 1. Das Sortiment umfasst einen Adapter zur Zwischenordnung zwischen einer Flasche und einem Kappenelement. Der Adapter weist hierbei zwei unterschiedliche Anschlusstypen auf, nämlich einen ersten Anschluss zum Aufsetzen auf die Flasche und einen vom ersten Anschluss verschiedenartigen zweiten Anschluss, auf den das Kappenelement aufsetzbar ist. Die Aufgabe wird weiterhin erfindungsgemäß gelöst durch die Verwendung eines solchen Adapters in einem solchen Sortiment.

Unter Anschlusstyp wird hierbei die Art der Verbindung, nämlich insbesondere Schraubverbindung und Prellverbindung, zwischen dem Adapter und dem Flaschenhals bzw. zwischen dem Adapter und dem Kappenelement verstanden. Die beiden Anschlüsse des Adapters sind an gegenüberliegenden Seiten, nämlich an dessen Unterseite und dessen Oberseite ausgebildet. Der zweite Anschluss zum Kappenelement hin ist selbst wiederum nach Art eines Flaschenhalses nachgebildet, d.h. der zweite Anschluss bildet einen Adapter-Flaschenhals für das Kappenelement aus. Dieser wird nachfolgend als Adapterhals bezeichnet und weist als Nachbildung des originären Flaschenhalses, lediglich mit anderem Anschlusstyp, daher insbesondere den gleichen Öffnungsdurchmesser wie der Flaschenhals auf. Er unterscheidet sich von diesem insbesondere lediglich durch die Ausgestaltung an seinem Außenumfang, wodurch - beispielsweise durch Ausbildung eines Gewindegangs oder durch Anformung einer radial abstehenden Nase - die unterschiedlichen Anschlusstypen verwirklicht werden.

Der erste Anschluss ist komplementär zum Flaschenhals ausgebildet und weist insbesondere eine zumindest annähernd gleiche Länge wie dieser auf. Er ist als Hülse mit insbesondere kreisrundem Durchmesser ausgebildet, der an seiner Innenwandung die erforderliche Ausgestaltung - beispielsweise ein Gewindegang (Schraubverschluss) oder Schnappelemente (Prellverschluss) zum Hintergreifen der Nasen - aufweist.

Unter Flaschenhals wird vorliegend allgemein ein einstückig beim Herstellvorgang (Kunststoff-Blasformen, -Spritzgießen....) angeformter hülsenartiger Bereich verstanden. Dieser weist üblicherweise eine Länge von 1 - 2 cm und beispielsweise etwa 1,5cm auf. Weiterhin weist er eine gegenüber der restlichen Flasche, nachfolgend als Flaschengrundkörper bezeichnet, deutlich verringerte Querschnittsfläche auf, die üblicherweise geringer als 50% der Querschnittsfläche des Flaschengrundkörpers ist, die dieser an einer vorgesehenen Trennlinie zum Kappenelement / Verschlusselement aufweist. Der Flaschengrundkörper verjüngt sich daher zum Flaschenhals hin deutlich. Bei den hier interessierenden Flaschen für Körperpflegeprodukte erfolgt diese Verjüngung nahezu auf einer horizontalen Ebene.

Durch diese Ausgestaltung wird es erstmals möglich, unterschiedliche Anschlusstypen bei den Flaschen einerseits und bei den Kappenelementen andererseits wahlweise miteinander zu kombinieren. Hierfür ist lediglich die Wahl eines entsprechenden Adapters erforderlich. Dadurch wird eine Reduzierung der Flaschenvielfalt ermöglicht. So braucht nämlich pro Flaschendesign lediglich eine Variante mit einem spezifischen Anschlusstyp ausgebildet zu werden. Dieses Flaschendesign ist dann wahlweise mit Kappenelementen kombinierbar, die den gleichen Anschlusstyp wie die Flasche oder auch einen unterschiedlichen Anschlusstyp aufweisen. Im letzteren Fall braucht lediglich der Adapter aufgesetzt zu werden.

Zweckdienlicherweise weist der Adapter einen Schraubverschluss zum Kappenelement hin als zweiten Anschluss auf. Der erste Anschluss zum Aufsetzen auf die Flasche ist vorzugsweise ein Prellverschluss. Prinzipiell können diese Anschlussarten auch vertauscht werden.

Der zweite Anschluss des Adapters umfasst hierzu vorzugsweise einen Adapterhals mit einem Aussengewinde, wobei das Aussengewinde einen um den Adapterhals vorzugsweise zumindest annähernd vollständig umlaufenden Gewindegang aufweist. In bevorzugter Ausgestaltung läuft der Gewindegang genau einmal um den Adapterhals herum. Das Gewinde ist beispielsweise als Steilgewinde ausgebildet. Dies ist insbesondere in Kombination mit Kappenelementen mit nicht-kreisrundem, beispielsweise ovalem Querschnitt vorgesehen. Alternativ läuft der Gewindegang mehrfach um den Adapterhals herum und ist insbesondere als ein Normgewinde ausgebildet. Letzteres ist insbesondere in Kombination mit kreisrunden Schraubverschlüssen vorgesehen. Bei der Verwendung eines Normgewindes können in kostengünstiger Weise Standard-Schraubverschlüsse beispielsweise als günstige Zukaufteile verwendet werden.

Zur Ausbildung des zweiten Anschlusses als Prellverschluss weist der Adapter eine Hülse, also ein rohrförmiges Teilstück auf, das über den Flaschenhals gestülpt wird. An seiner Innenwandung sind mehrere radial vorspringende Schnappelemente vorgesehen. Die Hülse weist dabei an ihrem Freiende mehrere vorzugsweise zwei oder vier einander gegenüberliegende Einbuchtungen auf, um eine ausreichende Elastizität der ansonst steifen Hülse für den Aufschnappvorgang zu gewährleisten.

Zweckdienlicherweise ist der Schraubverschluss des Adapters mit einer Kindersicherung ausgestattet, wie sie bei Schraubverschlüssen allgemein bekannt sind, um ein unerwünschtes Öffnen durch Kinder zu verhindern.

Gemäß einer bevorzugten Weiterbildung ist weiterhin eine Originalitätssicherung vorgesehen. Bei dieser handelt es sich um ein nach Art einer Aufreißlasche ausgebildetes Sicherungselement am Verschlusselement. Das Verschlusselement kann erst nach Ab- oder Aufreißen der Originalitätssicherung geöffnet werden. Diese ist vorzugsweise zwischen dem Kappenelement und dem Adapter und / oder zwischen dem Adapter und der Flasche ausgebildet.

In einer bevorzugten Weiterbildung weist der Adapter ein Dosiersystem mit einem Aufnameraum zur Aufname einer definierten Fluidmenge, insbesondere Flüssigkeitsmenge auf. Der Adapter selbst ist daher zumindest in Teilbereichen nach Art eines Behälters ausgebildet, in den eine definierte Flüssigkeitsmenge aus der Flasche eindosiert werden kann. Dieser Aufnameraum steht hierzu vorzugsweise über eine Überströmöffnung mit dem Innenvolumen der Flasche in Verbindung. Hierbei kann vorgesehen sein, dass ausgehend von der Überströmöffnung ein Schlauch in das Innenvolumen der Flasche sich erstreckt, so dass durch Druck auf die typischerweise elastische Flasche die Flüssigkeit aus der Flasche in den Aufnameraum eingeleitet wird. Weiterhin ist zweckdienlicherweise vorgesehen, dass der Aufnameraum nach oben offen ist und vom Kappenelement verschließbar ist. Der Aufnameraum ist daher insgesamt in etwa becherförmig ausgestaltet, so dass er als Trinkbecher herangezogen werden kann, wie dies beispielsweise bei Mundwässem gewünscht ist. In bevorzugter Weiterbildung ist hierbei vorgesehen, dass die Überströmöffnung bei aufgesetztem Kappenelement verschlossen ist, zumindest insoweit als dass bei geschlossenem Kappenelement sich der Aufnameraum nicht befüllen lässt.

Insbesondere für die Kombination mit nicht-kreisrunden Kappenelementen ist in einer bevorzugten Ausgestaltung vorgesehen, dass der Schraubverschluss einen Anschlag aufweist, der eine definierte Drehendposition des Kappenelements festlegt. Durch den Anschlag ist daher die gewünschte genaue Orientierung des Kappenelements bezüglich des Adapters und damit bezüglich der Flasche festgelegt. Der Anschluss ist hierbei insbesondere unterhalb des Gewindegangs an einem unteren Teilabschnitt des Adapterhalses vorgesehen. Das Kappenelement weist einen hierzu korrespondierenden Gegenanschlag auf.

Der Adapter weist in bevorzugter Weiterbildung einen umlaufenden Kragen auf, der bei aufgesetztem Kappenelement zwischen diesem und der Flasche sichtbar ist. Der Kragen bildet somit ein im zusammengesetzten Zustand von außen sichtbares Element, welches den Übergang von der Flasche zum Verschlusselement bestimmt und damit das Gesamtdesign maßgeblich mit beeinflusst.

Dieser Kragen umgibt dabei den zweiten Anschluss nach Art einer Schürze und weist typischerweise in Flaschenlängsrichtung betrachtet eine größere axiale Länge als der zweite Anschluss auf. Der Kragen bildet daher ein Teilstück der Verschlusskappe nach. Die hier interessierenden Kosmetikflaschen weisen etwas unterhalb des Flaschenhalses eine üblicherweise horizontal verlaufende Stufe oder einen Absatz auf, der eine Trennlinie zwischen dem Flaschengrundkörper und dem Kappenelement / Verschlusselement definiert. Auf diesem Absatz sitzt das Verschlusselement auf. Der Flaschenhals ist gegenüber dieser Stufe deutlich zurückgesetzt. Durch den Kragen wird daher dieser Absatz auf den Adapterhals überführt.

Der Adapter ist daher insgesamt in bevorzugter Ausgestaltung als ein rohrförmiges Element mit der umlaufenden Schürze (Kragen) ausgebildet, die das rohrförmige Element in den hinteren ersten (Prell-) Anschluss und den vorderen zweiten (Schraub-) Anschluss unterteilt. Die beiden Anschlüsse fluchten daher miteinander und weisen die gleiche kreisförmige Querschnittsgeometrie auf.

Insbesondere ist der Kragen hierbei derart ausgestaltet, dass er die Querschnittsgeometrie der Flasche auf eine verschiedenartige Querschnittsgeometrie des Kappenelements überführt.

Zweckdienlicherweise ist hierzu vorgesehen, dass der Kragen sich insbesondere nach Art eines Konus verjüngt. Alternativ besteht auch die Möglichkeit, dass der Kragen mit einem äußeren Mantel des Kappenelements fluchtet und somit eine Fortsetzung des Mantels des Kappenelements in einer Ebene darstellt. Vorzugsweise ist der Kragen hierbei mehrteilig, insbesondere zweiteilig ausgebildet und umfasst ein erstes zur Flasche orientiertes Kragenteil sowie ein zweites zum Kappenelement orientiertes zweites Kragenteil, welches sich zu diesem insbesondere konisch verjüngt. Zwischen den beiden Kragenteilen ist insbesondere eine umlaufende Kante ausgebildet, d.h. die beiden Kragenteile sind unterschiedlich geneigt ausgebildet. Diese Variante ist insbesondere in Kombination mit einem kreisrunden Kappenelement von besonderem Vorteil, da über das zweite Kappenteil eine deutliche Querschnittsveränderung und auch Querschnittsreduzierung erzielt wird.

Generell ist in bevorzugter Ausgestaltung der Kragen derart ausgebildet, dass seine Querschnittsfläche, insbesondere die Form, von seiner zur Flasche hin orientierten Unterseite zu seiner zum Kappenelement hin orientierten Oberseite variiert. Über den Kragen wird demnach der Typ oder die Art der Querschnittsgeometrie von der Flasche zum Kappenelement hin verändert. Bevorzugt wird eine ovale Querschnittskontur auf eine kreisrunde Querschnittskontur überführt.

Das modulare Sortiment oder Baukastensystem umfasst zusammenfassend also Kunststoffflaschen vorzugsweise mit unterschiedlichen Flaschenhalstypen, insbesondere wahlweise einen Prellverschluss-Typ oder einen Schraubverschluss-Typ, einen oder mehrere der hier beschriebenen Adapter sowie Kappenelemente, ebenfalls mit unterschiedlichen Anschlusstypen, insbesondere wahlweise mit Prellverschluss-Typ oder Schraubverschluss-Typ. Der besondere Vorteil dieses modularen Baukastensystems ist darin zu sehen, dass durch den Adapter zwischen unterschiedlichen Anschlusstypen der Flasche und dem jeweiligen Kappenelement vermittelt werden kann, so dass prinzipiell jede beliebige Flasche - egal welchen Flaschentyp diese aufweist, mit einem beliebigen Kappenelement kombinierbar ist, wiederum egal, welchen

Anschluss-Typ das Kappenelement aufweist. Es braucht daher für jede Design-Variante sowohl einerseits für die Ausgestaltung der Flasche als auch andererseits für die Ausgestaltung des Kappenelements jeweils nur eine Anschluss-Typ-Variante bereitgestellt zu werden. Hierdurch lassen sich Herstellungskosten, insbesondere Werkzeugkosten einsparen. Zweckdienlichenweise wird dieses Sortiment noch ergänzt um den (Design-) Adapter, wie er aus der DE 10 2007 049 217 B4 zu entnehmen ist.

Ausführungsbeispiele der Erfindung werden im Folgenden anhand der Figuren näher erläutert. Es zeigen hierbei:
- Fig. 1: eine Flasche mit Adapter und Kappenelement in einer Explosionsdarstellung,
- Fig. 2: drei unterschiedlich ausgestaltete Adapter,
- Fig. 3: eine Ansicht auf die einen Prellanschluss bildende Unterseite eines Adapters,
- Fig. 4: in Gegenüberstellung drei Flaschen mit den unterschiedlichen Adaptern gemäß Fig. 2 und unterschiedlichen Kappenelementen,
- Fig. 5A: eine Schnittansicht einer Flasche mit einem Adapter, der ein Dosiersystem aufweist und
- Fig. 5B: eine vergrößerte und um 90° gedrehte Darstellung einer Schnittansicht der Flasche gemäß Fig. 5A.

In den Figuren sind gleichwirkende Teile mit den gleichen Bezugszeichen versehen.

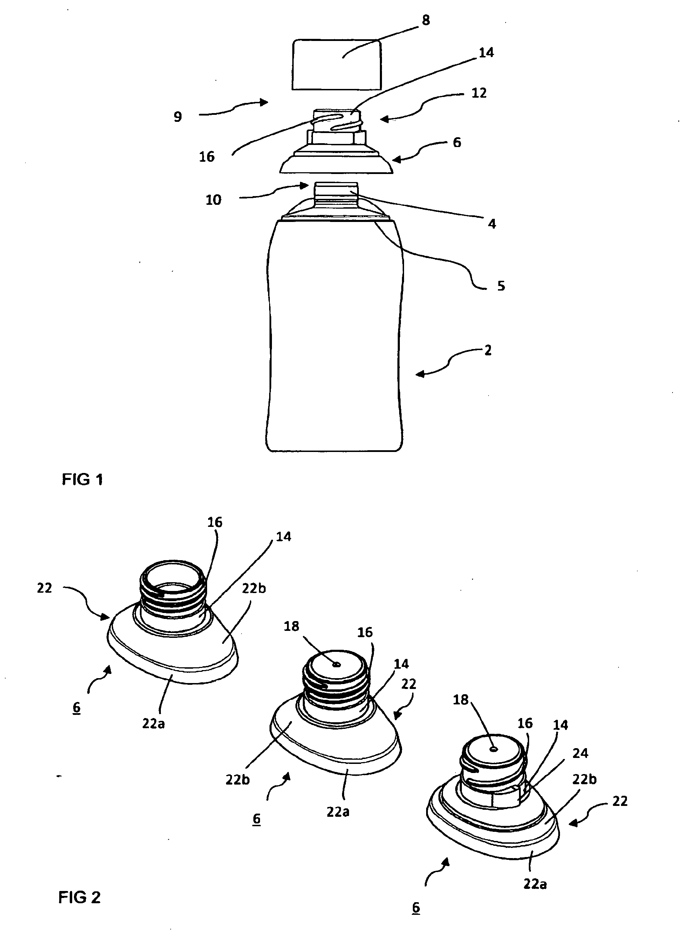

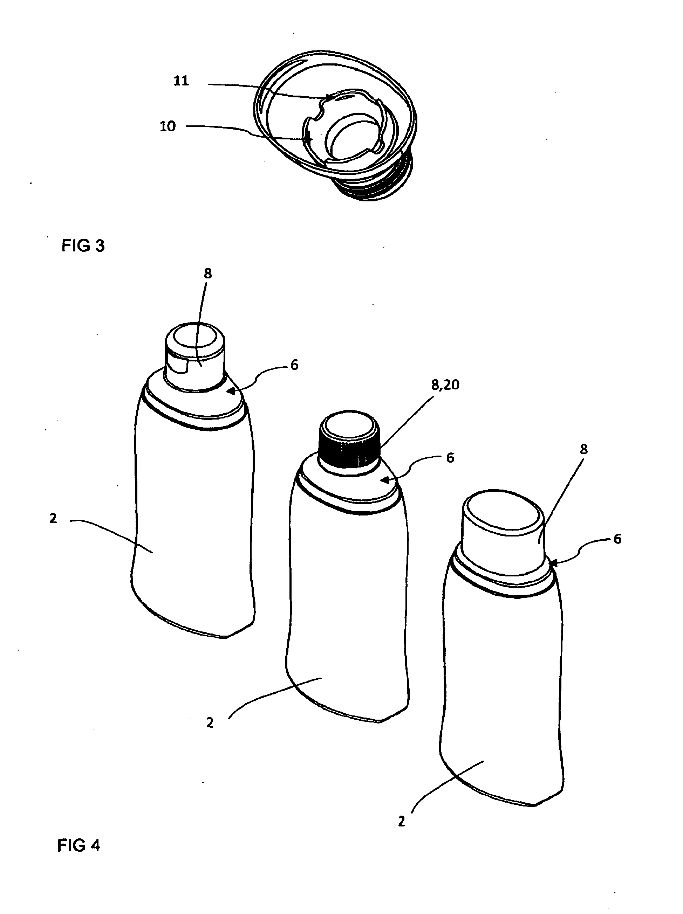

Fig. 1 zeigt eine insbesondere als Kosmetikflasche ausgebildete Flasche 2 mit einem Flaschenhals 4, auf den ein Adapter 6 aufgesetzt ist. Auf den Adapter 6 ist wiederum ein Kappenelement 8 aufgesetzt. Kappenelement 8 und Adapter 6 bilden ein Verschlusselement 9. Zwischen der Flasche 2 und dem Adapter 6 ist ein an sich bekannter Prellverschluss 10 (vgl. auch Fig. 3) ausgebildet, d.h. der Adapter 6 wird auf den Flaschenhals aufgeschnappt bzw. aufgedrückt.

Die Flasche 2 weist typischerweise eine von der kreisform abweichende Querschnittsform auf, die in einem oberen Übergangsbereich zum kreisrunden Flaschenhals 4 überführt wird. Der Beginn dieses Übergangsbereichs - in Längsrichtung der Flasche 2 gesehen - wird durch einen horizontal umlaufenden Absatz 5 definiert. Dieser ist als Anschlag für das Kappenelement 8 ausgebildet, d.h. ein Kappenelement mit gleichem Anschlusstyp sitzt auf diesem Anschlag auf. Der Adapter 6 ist nunmehr derart ausgebildet, dass er das Kappenelement insoweit nachbildet, als dass er ebenfalls auf diesem Anschlag aufsitzt.

Von besonderer Bedeutung ist nunmehr, dass der Anschlusstyp zwischen Adapter 6 und Flasche 2 verschieden zu dem Anschlusstyp zwischen Adapter 6 und Kappenelement 8 ist. Der Anschlusstyp zwischen Kappenelement 8 und Adapter 6 ist im Ausführungsbeispiel durch einen Schraubverschluss 12 gebildet. Hierzu weist der Adapter einen kreisrunden Adapterhals 14 auf, an dessen Außenumfang ein insbesondere zumindest einmal umlaufender Gewindegang 16 ausgebildet ist. Im Ausführungsbeispiel der Fig. 1 ist das Gewinde als ein Steilgewinde ausgebildet.

In Fig. 2 sind unterschiedliche Ausgestaltungen des Adapters 6 gezeigt. Der mittlere und der rechte Adapter 6 weisen im Unterschied zu dem rechts dargestellten Adapter 6 einen Spritzeinsatz mit einer Dosieröffnung 18 auf und ist insbesondere in Kombination mit einem einfachen, einstückigen und insbesondere kreisrunden Schraubdeckel 20 vorgesehen, wie er bei der mittleren Flasche in Fig. 4 dargestellt ist. Der linke Adapter 6 ist in Kombination mit zweiteiligen Kappenelementen 8 vorgesehen, die ein Grundteil sowie einen Verschlussdeckel aufweisen, der üblicherweise über ein Scharnier am Grundteil befestigt ist. Grundteil und Verschlussdeckel bilden eine einstückige, üblicherweise als Kunststoff-Spritzgussteil ausgebildete Baueinheit. Das Grundteil weist üblicherweise eine Dosieröffnung auf.

Im Ausführungsbeispiel weisen alle drei Adapter 6 einen umlaufenden Kragen 22 auf, der sich in den Ausführungsbeispielen zum Adapterhals 14 etwas verjüngt. Der Kragen 22 ist zweiteilig ausgebildet und umfasst ein erstes, unteres Kragenteil 22a sowie ein sich daran anschließendes oberes Kragenteil 22b. Das untere Kragenteil 22a sitzt in montierter Stellung auf dem Absatz 5 auf. Das Kragenteil 22b verjüngt sich zum Adapterhals 14 hin, reduziert und überführt daher die am Absatz 5 vorliegende Querschnittsfläche auf den zylindrischen Adapterhals 14. Das untere Kragenteil 22a verjüngt sich im Ausführungsbeispiel ebenfalls, jedoch deutlich geringer als das obere Kragenteil 22b. Insbesondere wird durch das obere Kragenteil 22b die Querschnittskontur von der Unterseite des Adapters 6 hin zur Adapterhalsseite insbesondere kontinuierlich und gleichmäßig verändert. Insbesondere wird die ursprünglich in etwa ovale Querschnittskontur der Flasche 2 auf die kreisförmige Kontur der Kappenelemente 8 überführt.

Die beiden Adapter 6 links und in der Mitte weisen ein Normgewinde mit einem mehrfach umlaufenden Gewindegang 16 auf. Im Unterschied hierzu weist der auf der rechten Seite dargestellte Adapter 6 ein Steilgewinde mit einem lediglich einfach umlaufenden Gewindegang 16 auf. Unterhalb des Gewindegangs 16 sind vorzugsweise zwei diametral gegenüberliegende Anschläge 24 vorgesehen, die die Drehbewegung des Kappenelements 8 beim Aufschrauben begrenzen. Die Anschläge 24 wirken mit einem hier nicht mehr dargestellten Gegenanschlag an der Innenseite des Kappenelements 8 zusammen. Durch die Anschläge 24 wird die genaue Orientierung des vorzugsweise ovalförmigen Kappenelements 8 festgelegt, so dass das Kappenelement 8 in der gleichen Orientierung wie die typischerweise ebenfalls ovalförmige Flasche 2 ist.

Wie bereits erwähnt ist der Adapter 6 an seiner zur Flasche 2 orientierten Unterseite zur Ausbildung eines Prellverschlusses 10 ausgebildet. Eine beispielhafte Ausgestaltung ist aus Fig. 3 zu entnehmen. Wie gut zu erkennen ist, ist der Prellverschluss 10 als eine kreisförmige Hülse ausgebildet, die an ihrer Innenwandung mehrere, im Ausführungsbeispiel vier, um den Umfang verteilt angeordnete Schnappelemente 11 aufweist. Diese sind als radial nach innen springende ringsegmentartige Vorsprünge ausgebildet, die im aufgesetzten Zustand die korrespondierende ring- oder ringsegmentartige Nasen hintergreifen. Im Ausführungsbeispiel sind weiterhin randseitige Einbuchtungen zu erkennen, die einzelne Ringsegmente definieren, in denen die Schnappelemente 11 ausgebildet sind.

Der Kragen 22 umgibt den Prellverschluss 10 nach Art einer Schürze. Im Ausführungsbeispiel weist er im Unterschied zu dem Prellverschluss einen ovalen Querschnitt auf. Der Adapter 6 kann daher als ein rohrförmiges Element mit einer umlaufenden Schürze betrachtet werden, die das rohrförmige Element in den hinteren Prellanschluss 10 und den vorderen Schraubverschluss 12 unterteilt. Die beiden Anschlüsse 10,12 fluchten daher miteinander und weisen die gleiche kreisförmige Querschnittsgeometrie auf.

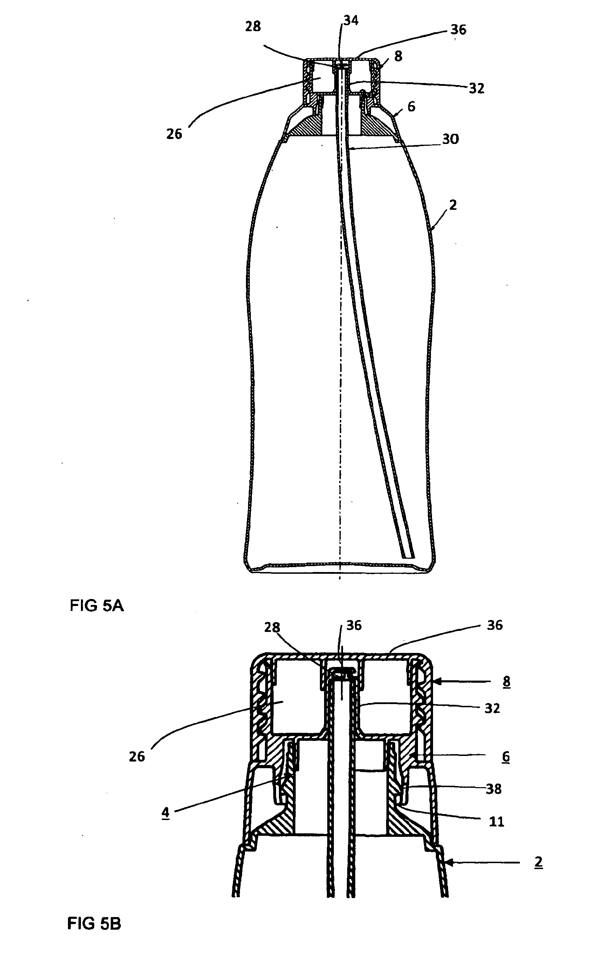

Gemäß dem in Fig. 5A, 5B dargestellten Ausführungsbeispiel ist der Adapter 6 mit einem Dosiersystem ausgestattet. Hierzu umfasst der Adapter 6 einen topf- oder becherförmigen, nach oben hin offenen Aufnameraum 26. Dieser ist am oberen endseitigen Bereich des Adapters 6 ausgebildet. Die Außenwandung des Aufnameraums 26 ist als der Schraubverschluss 12 ausgebildet. Der Aufnameraum 26 steht über eine Überströmöffnung 28 mit dem Innenvolumen der Flasche 2 in Verbindung. Im Ausführungsbeispiel schließt sich hierbei an die Überströmöffnung 28 ein in die Flasche 2 hineinreichender Schlauch 30 an. Die Überströmöffnung 28 ist durch einen in den Aufnameraum 26 hineinragenden Dom 32 gebildet. Die obere Kante des Doms 32 definiert daher die maximal mögliche Füllstandshöhe im Aufnamebehälter 26. Etwas beabstandet von der Überströmöffnung 28 ist noch ein tellerartiges Prallelement 34 vorgesehen, welches zur Umlenkung des aus der Überströmöffnung 28 austretenden Fluids (Flüssigkeit) dient.

Wie aus Fig. 5A, 5B erkennbar ist, weist das Kappenelement 8 einen Deckel 36 auf (ist daher ähnlich wie das Kappenelement 8 gemäß dem linken Beispiel in Fig 4 ausgebildet). Der Deckel 36 weist korrespondierend zum Dom 32 an seiner Unterseite ebenfalls eine domartige Hülse auf, die bei geschlossenem Deckel 36 über den Dom 32 gestülpt ist, so dass die Überströmöffnung 34 bei geschlossenem Deckel 36 verschlossen ist.

In Fig. 5B sind weiterhin die Schnappelemente 11 des Prellverschlusses 10 sowie radial abstehende Nasen 38 am Flaschenhals 4 zu erkennen.

Der Adapter 6 mit den zwei unterschiedlichen Anschlusstypen bietet in vorteilhafter Weise die Möglichkeit der Kombination von Flaschen 2 und Kappenelementen 8 mit unterschiedlichen Anschlusstypen.

Der hier beschriebene Adapter wird insbesondere in Kombination mit dem aus der DE 10 2007 049 21 T B4 beschriebenen Adapter nach Art eines Baukastensystems verwendet, um quasi beliebige Kappenelement-Typen mit beliebigen Flaschen-Typen kombinieren zu können, unabhängig von den jeweiligen Anschlusstypen. Insgesamt ist dadurch die Teilevielfalt deutlich reduziert, so dass eine effektivere und kostengünstigere Herstellung unterschiedlichster Varianten bestehend aus Flasche 2, Adapter 6 und Kappenelement 8 ermöglicht ist.

### Bezugszeichenliste

- 2: Flasche
- 4: Flaschenhals
- 5: Absatz
- 6: Adapter
- 8: Kappenelement
- 9: Verschlusselement
- 10: Prellverschluss
- 11: Schnappelemente
- 12: Schraubverschluss
- 14: Adapterhals
- 16: Gewindegang
- 18: Dosieröffnung
- 20: Schraubdeckel
- 22: Kragen
- 22a: erstes Kragenteil
- 22b: zweites Kragenteil
- 24: Anschlag
- 26: Aufnameraum
- 28: Überströmöffnung
- 30: Schlauch
- 32: Dom
- 34: Prallelement
- 36: Deckel
- 38: radial abstehende Nasen

## Patentansprüche

1. Sortiment umfassend
- Kunststoffflaschen (2) mit einem ersten Flaschenhals-Typ,
- Adapter (6), die einen ersten Anschluss (10) zum Aufsetzen auf die Flasche (2) und einen vom ersten Anschluss (10) verschiedenartigen zweiten Anschluss (12) für jeweils ein Kappenelement (8) aufweisen, sowie
- Kappenelemente (8) mit unterschiedlichen Anschluss-Typen, insbesondere wahlweise mit Prellverschluss-Typ oder mit Schraubverschluss-Typ, wobei die Kappenelemente (8) wahlweise den gleichen Anschlusstyp wie die Kunststoffflaschen (2) aufweisen oder einen hierzu unterschiedlichen Anschlusstyp, der kompatibel ist zu dem zweiten Anschluss (12) des Adapters (6).

2. Sortiment nach Anspruch 1,
**dadurch gekennzeichnet, dass** der zweite Anschluss ein Schraubverschluss (12) und der erste Anschluss ein Prellverschluss (10) ist.

3. Sortiment nach Anspruch 2,
**dadurch gekennzeichnet, dass** der zweite Anschluss (12) einen Adapterhals (14) mit einem Außengewinde aufweist, das einen um den Adapterhals (14) umlaufenden Gewindegang (16) umfasst.

4. Sortiment nach einem der vorhergehenden Ansprüche,
**dadurch gekennzeichnet, dass** eine Kindersicherung und / oder eine Originalitätssicherung vorgesehen sind / ist.

5. Sortiment nach einem der vorhergehenden Ansprüche,
**dadurch gekennzeichnet, dass** der Adapter (6) ein Dosiersystem mit einem Aufnahmeraum (26) zur Aufnahme einer definierten Fluidmenge aufweist.

6. Sortiment nach Anspruch 5,
**dadurch gekennzeichnet, dass** das Dosiersystem eine Überströmöffnung (28) aufweist, die bei auf der Flasche (2) aufgesetztem Adapter (6) in Strömungsverbindung mit dem Innenvolumen der Flasche (2) steht.

7. Sortiment nach Anspruch 5 oder 6,
**dadurch gekennzeichnet, dass** der Aufnahmeraum (26) nach oben offen und vom Kappenelement (8) reversibel verschließbar ist.

8. Sortiment nach einem der vorhergehenden Ansprüche,
**dadurch gekennzeichnet, dass** der zweite Anschluss (12) einen Anschlag (24) aufweist, der eine definierte Drehendposition des Kappenelements (8) festlegt.

9. Sortiment nach einem der vorhergehenden Ansprüche,
**dadurch gekennzeichnet, dass** der Adapter (6) als ein rohrförmiges Element mit einem nach Art einer Schürze umlaufenden Kragen (22) ausgebildet ist, wobei das rohrförmige Element von dem Kragen (22) in einen den ersten Anschluss (10) bildenden hinteren Bereich und einen den zweiten Anschluss (12) bildenden vorderen Bereich unterteilt ist.

10. Sortiment nach Anspruch 9,
**dadurch gekennzeichnet, dass** der Kragen (22) sich nach Art eines Konus verjüngt.

11. Sortiment nach Anspruch 9 oder 10,
**dadurch gekennzeichnet, dass** der Kragen (22) ein erstes zur Flasche (2) orientiertes Kragenteil (22a) und ein zweites, sich zum Verschlusselement hin verjüngendes zweites Kragenteil (22b) aufweist.

12. Sortiment nach einem der Ansprüche 9 bis 11, **dadurch gekennzeichnet, dass** der Kragen (22) an seiner zur Flasche (2) orientierten Unterseite eine andersartige Querschnittsform als an seiner zum Kappenelement (8) orientierten Oberseite aufweist.

13. Verwendung eines Adapters (6) in einem Sortiment nach einem der vorhergehenden Ansprüche, der einen ersten Anschluss (10) zum Aufsetzen auf eine Flasche (2) und einen vom ersten Anschluss (10) verschiedenartigen zweiten Anschluss (12) aufweist, auf den ein Kappenelement (8) aufsetzbar ist.

## Claims

1. Assortment comprising
- plastic bottles (2) having a first bottleneck type,
- adapters (6) which have a first connection (10) to be placed on the bottle (2) and a second connection (12) which is different from the first connection (10) for a respective cap element (8), as well as
- cap elements (8) having different connection types, in particular optionally having a snap-on cap type or having a screw cap type, wherein the cap elements (8) optionally have the same connection type as the plastic bottles (2) or a different connection type from this which is compatible with the second connection (12) of the adapter (6).

2. Assortment according to claim 1,
**characterised in that** the second connection is a screw cap (12) and the first connection is a snap-on cap (10).

3. Assortment according to claim 2,
**characterised in that** the second connection (12) has an adapter neck (14) having an outer thread which comprises a thread path (16) which circulates around the adapter neck (14).

4. Assortment according to one of the preceding claims,
**characterised in that** child protection and/or tamper protection is/are provided.

5. Assortment according to one of the preceding claims, **characterised in that** the adapter (6) has a dosage system having a receiving space (26) to receive a defined quantity of liquid.

6. Assortment according to claim 5,
**characterised in that** the dosage system has an overflow opening (28) which has a flow connection to the inner volume of the bottle (2) in the case of the adapter (6) being placed on the bottle (2).

7. Assortment according to claim 5 or 6,
**characterised in that** the receiving space (26) is open upwardly and is able to be reversibly sealed from the cap element (8).

8. Assortment according to one of the preceding claims,
**characterised in that** the second connection (12) has a stop (24) which determines a defined rotational end position of the cap element (8).

9. Assortment according to one of the preceding claims,
**characterised in that** the adapter (6) is formed as a tubular element having a collar (22) circulating in the manner of a skirt, wherein the tubular element is divided by the collar (22) into a rear region which forms the first connection (10) and a front region which forms the second connection (12).

10. Assortment according to claim 9,
**characterised in that** the collar (22) tapers in the manner of a cone.

11. Assortment according to claim 9 or 10,
**characterised in that** the collar (22) has a first collar part (22a) which is orientated towards the bottle (2) and a second collar part (22b) which tapers towards the sealing element.

12. Assortment according to one of claims 9 to 11,
**characterised in that** the collar (22) has a different cross-sectional shape on its lower side which is orientated towards the bottle (2) than on its upper side which is orientated towards the cap element (8).

13. Use of an adapter (6) in an assortment according to one of the preceding claims, which has a first connection (10) to be placed on a bottle (2) and a second connection (12) which is different from the first connection (10) and on which a cap element (8) is able to be placed.

## Revendications

1. Assortiment comprenant,
- des flacons ou bouteilles (2) en matière plastique avec un premier type de goulot,
- des adaptateurs (6), qui présentent un premier raccord (10) pour l'application sur le flacon ou la bouteille (2), et un deuxième raccord (12) de type différent de celui du premier raccord (10) pour un élément de capuchon ou de bouchon de fermeture (8), ainsi que
- des éléments de capuchon (8) avec des types de raccord différents, notamment au choix du type fermeture à enclencher ou du type fermeture à visser, les éléments de capuchon (8) présentant au choix le même type de raccord que les flacons ou bouteilles (2) en matière plastique ou un type de raccord différent, qui est compatible avec le deuxième raccord (12) de l'adaptateur (6).

2. Assortiment selon la revendication 1,
**caractérisé en ce que** le deuxième raccord est une fermeture à vis (12) et le premier raccord une fermeture à enclenchement (10).

3. Assortiment selon la revendication 2,
**caractérisé en ce que** le deuxième raccord (12) présente un goulot d'adaptateur (14) avec un filetage extérieur, qui comprend un filet de filetage (16) s'étendant de manière périphérique autour du goulot d'adaptateur (14).

4. Assortiment selon l'une des revendications précédentes,
**caractérisé en ce qu'**il est prévu une sécurité enfant et/ou une garantie d'inviolabilité.

5. Assortiment selon l'une des revendications précédentes,
**caractérisé en ce que** l'adaptateur (6) présente un système de dosage avec une cavité de réception (26) destinée à recevoir une quantité de fluide définie.

6. Assortiment selon la revendication 5,
**caractérisé en ce que** le système de dosage comporte une ouverture de déversement (28), qui, lorsque l'adaptateur (6) est en place sur le flacon ou la bouteille (2), se trouve en communication sur le plan de l'écoulement, avec le volume intérieur du flacon ou de la bouteille (2).

7. Assortiment selon la revendication 5 ou la revendication 6,
**caractérisé en ce que** la cavité de réception (26) est ouverte vers le haut et peut être fermée de manière réversible par l'élément de capuchon (8).

8. Assortiment selon l'une des revendications précédentes,
**caractérisé en ce que** le deuxième raccord (12) comporte une butée (24), qui fixe une position extrême de rotation, définie, de l'élément de capuchon (8).

9. Assortiment selon l'une des revendications précédentes,
**caractérisé en ce que** l'adaptateur (6) est réalisé en tant qu'élément de forme tubulaire avec une collerette périphérique (22) à la manière d'un tablier, l'élément de forme tubulaire étant subdivisé par la collerette (22) en une zone arrière formant le premier raccord (10) et une zone avant formant le deuxième raccord (12).

10. Assortiment selon la revendication 9,
**caractérisé en ce que** la collerette (22) se rétrécit à la manière d'un cône.

11. Assortiment selon la revendication 9 ou la revendication 10,
**caractérisé en ce que** la collerette (22) présente une première partie de collerette (22a) orientée vers le flacon ou la bouteille (2), et une deuxième partie de collerette (22b) se rétrécissant en direction de l'élément de fermeture.

12. Assortiment selon l'une des revendications 9 à 11, **caractérisé en ce que** la collerette (22) présente sur son côté inférieur orienté vers le flacon ou la bouteille (2), une forme de section transversale de type différent de celle au niveau de son côté supérieur orienté vers l'élément de capuchon (8).

13. Utilisation d'un adaptateur (6) dans un assortiment selon l'une des revendications précédentes, qui présente un premier raccord (10) pour l'application sur le flacon ou la bouteille (2), et un deuxième raccord (12) de type différent de celui du premier raccord (10) et sur lequel peut être appliqué un élément de capuchon ou de bouchon de fermeture (8).
